# EUROPEAN PATENT APPLICATION

(11) **EP 3 760 426 A1**
(43) Date of publication of application: **06.01.2021**
(21) Application number: 19757929.5
(22) Date of filing: 07.01.2019
(51) Int. Cl.: B31B 70/64, B32B 27/32, B65D 30/16

(54) **METHOD FOR THREE-DIMENSIONALLY MOLDING FILM, METHOD FOR MANUFACTURING FILM MOLDED BODY, AND FILM MOLDED BODY**

(30) Priority: 26.02.2018 JP 2018031838
(71) Applicant: Toyo Seikan Co., Ltd., Tokyo 141-8640 (JP)
(72) Inventor: TANAKA, Hiroki, Yokohama-shi Kanagawa 230-0001 (JP); YASUUMI, Takahiro, Yokohama-shi Kanagawa 230-0001 (JP); ISHIZAKA, Koichi, Yokohama-shi Kanagawa 230-0001 (JP); HATA, Motohide, Yokohama-shi Kanagawa 230-0001 (JP); SHISHIDO, Shoutaro, Yokohama-shi Kanagawa 230-0001 (JP)
(74) Representative: dompatent von Kreisler Selting Werner - Partnerschaft von Patent- und Rechtsanwälten mbB
(86) International application number: PCT/JP2019/000047
(87) International publication number: WO 2019/163305

(57) **Abstract**

Provided are a method for three-dimensionally molding a film, a method for manufacturing a film molded body, and a film molded body that make it possible to easily perform three-dimensional molding of an inner film portion while achieving a reduction in processing time and a decrease in energy consumption and without requiring a design change to the existing equipment. A method for three-dimensionally molding a film, the method including performing cold compression molding in a thickness direction on a film overlapping section 50 in which at least one inner film portion 20 including a first layer 21 and a second layer 22 having an elongation smaller than that of the first layer is arranged between two outer film portions 30 in a non-fixed state with respect to the outer film portions 30, thereby causing the inner film portion 20 to protrude toward the second layer 22 side at the film overlapping section 50.

## Description

### [Technical field]

The present invention relates to a method for three-dimensionally molding a film, a method for manufacturing a film molded body, and a film molded body.

### [Background Art]

In the conventional production of a film molded body such as a pouch made of a film, three-dimensional molding such that causes a part of the film to protrude toward a front or rear side of the film has been performed. A method of hot press-molding a film to form a protruding portion having a predetermined shape, and then cooling the film is generally known as such a method for three-dimensional molding a film (see, for example, Patent Literature 1).

It is also known to form a film overlapping section in which a plurality of film portions is arranged to overlap with each other, such as a gusset portion (gore section) formed at the bottom or side of the film molded body, in such a film molded body, e.g. a pouch (see, for example, Patent Literature 2).

### [Citation List]

### [Patent Literature]

Patent Literature 1: Japanese Patent Application Publication No. 2010-76132.
Patent Literature 2: Japanese Patent Application Publication No. 2008-290737.

### [Summary of Invention]

### [Technical Problem]

In the film molded body such as a pouch as disclosed in Patent Literature 2, it is required that a protruding portion be formed on the inner film portion located on the inner side among the plurality of film portions constituting the film overlapping section.

However, when an attempt is made to form the protruding portion on the inner film portion by using the hot press-molding method such as described in Patent Literature 1, where press molding is performed in a state in which the outer film portion and the inner film portion are arranged to overlap with each other, the outer film portion and the inner film portion are thermally fused by the heat during processing. Therefore, the protruding portion needs to be formed on the inner film portion in a state before the outer film portion and the inner film portion are arranged to overlap with each other.

In this case, the already existing equipment for molding film molded bodies needs to be provided with equipment for forming a protruding portion on the inner film portion in a state before the outer film portion and the inner film portion are arranged to overlap with each other, or with a zone for cooling the inner film portion. The resulting problem is that it is necessary to make a major design change to the existing equipment.

Further, in the hot press-molding method such as described in Patent Literature 1, problems are also associated with the hot press-molding method itself. Thus, since the cooling time is required after the hot press-molding, the processing time becomes long, and since heating or cooling is required, energy consumption is increased.

The present invention solves these problems, and it is an object thereof to provide a method for three-dimensionally molding a film, a method for manufacturing a film molded body, and a film molded body that make it possible to easily perform three-dimensional molding of an inner film portion while achieving a reduction in processing time and a decrease in energy consumption and without requiring a design change to the existing equipment.

### [Solution to Problem]

With a method for three-dimensionally molding a film according to the present invention, the aforementioned problems are solved by performing cold compression molding in a thickness direction on a film overlapping section in which at least one inner film portion including a first layer and a second layer having an elongation smaller than that of the first layer is arranged between two outer film portions in a non-fixed state with respect to the outer film portions, thereby causing the inner film portion to protrude toward the second layer side at the film overlapping section.

Further, with a method for manufacturing a film molded body according to the present invention, which is a method for manufacturing a film molded body in which at least one inner film portion including a first layer and a second layer having an elongation smaller than that of the first layer forms a gusset portion between two outer film portions, the aforementioned problems are solved by performing cold compression molding in a thickness direction on the outer film portions at a film overlapping section in the gusset portion, thereby causing the inner film portion to protrude toward the second layer side at the film overlapping section.

Furthermore, with a film molded body according to the present invention, which is a film molded body in which at least one inner film portion including a first layer and a second layer having an elongation smaller than that of the first layer forms a gusset portion between two outer film portions, the aforementioned problems are solved as a result of the inner film portion in the gusset portion having a protruding portion that protrudes to the second layer side at a film overlapping section.

The term "cold" in the present description means a temperature range including normal temperature (20°C±15°C), which is lower than a Vicat softening temperature of constituent materials of the inner film portion and the outer film portion.

Also, there are various indicators for the "elongation" of each layer of each film portion, and examples thereof include elastic modulus, Young's modulus, yield elongation, and fracture elongation.

Further, the term "inner film portion" used in the present description means a film portion arranged on the inner side when stacking a plurality of film portions and performing compression molding, and is not limited to the meaning of a film portion arranged on the inner side in a state of a film molded body.

Further, similarly, the term "outer film portion" used in the present description means a film portion arranged on the outer side when stacking a plurality of film portions and performing compression molding, and is not limited to the meaning of a film portion arranged on the outer side in a state of a film molded body.

### [Advantageous Effects of Invention]

According to the present invention, by performing cold compression molding in the thickness direction on the film overlapping section, it is possible not only to avoid thermal fusion between film portions, which tends to occur when three-dimensional processing is performed by hot press-molding, and achieve a reduction in processing time and a decrease in energy consumption as compared with the case where three-dimensional processing is performed by hot press-molding, but also to exert the effects described below.

That is, in the present invention, by performing cold compression molding in the thickness direction on the film overlapping section where the inner film portion is arranged in a non-fixed state between the outer film portions, the inner film portion can be protruded to the second layer side without leaving a three-dimensional processing mark on the outer film portion or while leaving a small three-dimensional processing mark on the outer film portion. As a result, it is possible to easily perform three-dimensional processing on the inner film portion even after forming the film overlapping section, for example, after shaping a pouch. Therefore, it is sufficient to provide equipment for performing three-dimensional processing on the inner film portion as post-processing for the existing equipment, and there is no need to make a design change to the existing equipment.

Here, the mechanism of the protrusion phenomenon that is manifested when the inner film portion including the first layer and the second layer having a smaller elongation than the first layer is cold compressed in the thickness direction is not necessarily clear, but it is conceivable that the reason therefor is that after the compressive force is released, the thickness restoration behavior of the inner film portion is such that the first layer with relatively large elongation undergoes large restoration and the second layer with relatively small elongation undergoes little restoration.

In addition, the appearance of the protrusion phenomenon on the inner film portion while no three-dimensional processing mark is left on the outer film portion or a small three-dimensional processing mark is left on the outer film portion when cold compression molding is performed in the thickness direction, as described hereinabove, is conceivably due to the fact that the inner film portion extends in the plane direction of the film and is compressed in the thickness direction greater than the outer film portion because when compression molding is performed on the film overlapping section by a compression tool from the outer side of the outer film portion, friction between the film portions is less than that between the outer film portion and the compression tool.

### [Brief Description of Drawings]

[Fig. 1] Fig. 1 is a plan view showing a pouch according to an embodiment of the present invention.
[Fig. 2] Fig. 2 is a cross-sectional view taken by cutting in the thickness direction along the line A-A in Fig. 1.
[Fig. 3] Fig. 3 is a cross-sectional view showing an example of a method for three-dimensionally molding a film.
[Fig. 4] Fig. 4 is a photograph of a pouch in which a protruding portion is formed on the inner film portion.
[Fig. 5] Fig. 5 is a test result of a test conducted to confirm a suitable compression molding ratio.
[Fig. 6] Fig. 6 is a cross-sectional view showing a modified example of the film overlapping section.
[Fig. 7] Fig. 7 is an explanatory view schematically showing a modified example of the gusset portion.
[Fig. 8] Fig. 8 is an explanatory view schematically showing a modified example of the gusset portion.

### [Description of Embodiments]

A pouch 10 as a film molded body, which is an embodiment of the present invention, will be described below with reference to the drawings.

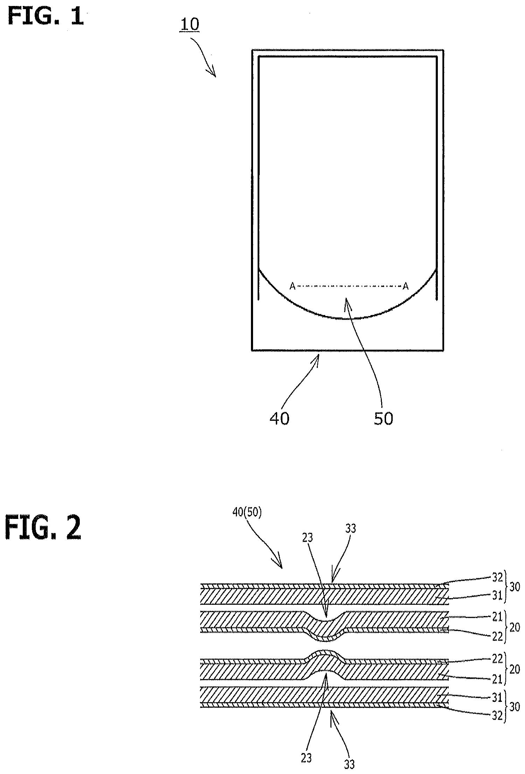

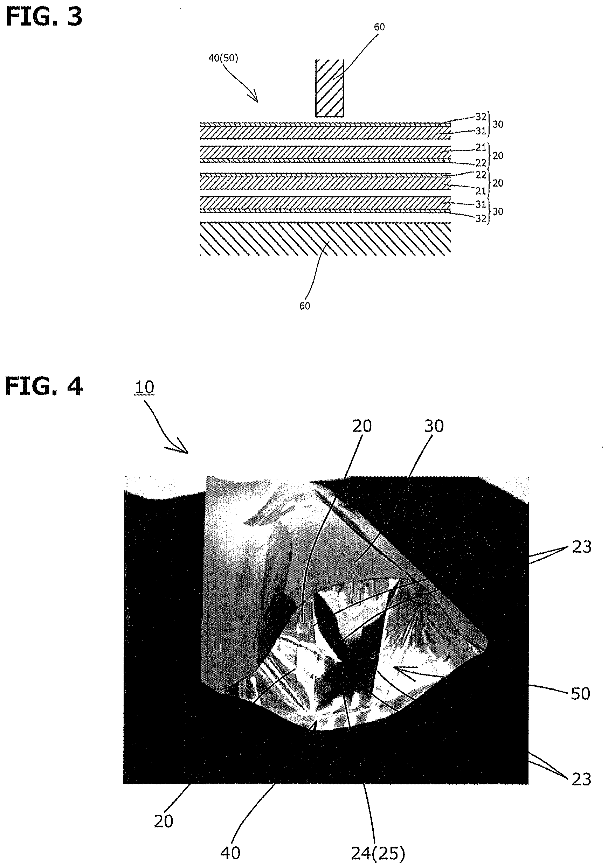

First, as shown in Figs. 1 and 4, the pouch 10 has a bag-like shape formed by thermally fusing the outer edges of a film as a material, and serves for accommodating contents such as detergent and shampoo.

As shown in Fig. 1 and Fig. 2, a gusset portion (gore section) 40 obtained by disposing two inner film portions 20 between two outer film portions 30 is formed on the bottom of the pouch 10.

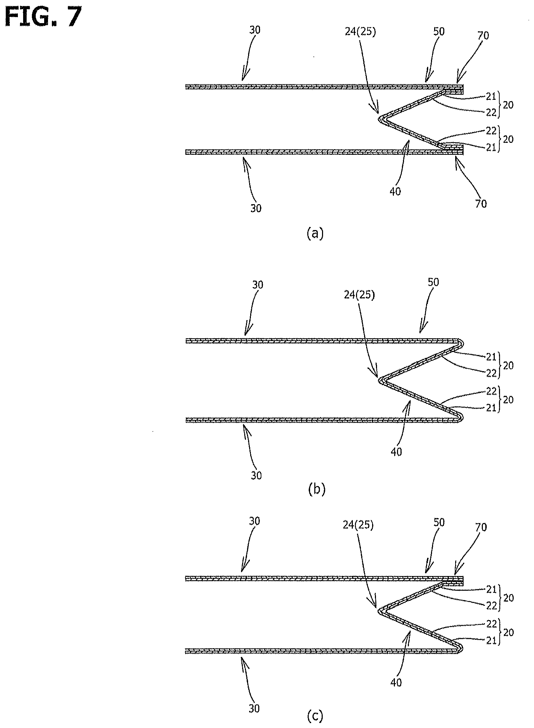

In the present embodiment, in the gusset portion 40, as can be seen from Fig. 4 and (a) in Fig. 7, the two inner film portions 20 have a folded-back portion 24 connected at the upper ends thereof. Moreover, each outer film portion 30 is partially thermally fused to the opposing inner film portion 20 by thermally fusing a first layer 21 of the inner film portion 20 and a first layer 31 of the outer film portion 30 in a thermal bonding portion 70 on the lower side (bottom side) thereof.

As shown in Fig. 2, each inner film portion 20 is formed as a laminated film obtained by laminating and bonding the first layer 21 and a second layer 22 having an elongation smaller than that of the first layer 21.

As shown in Fig. 2 and Fig. 3, the two inner film portions 20 are arranged so that the second layers 22 face each other when performing compression molding or folding the pouch 10.

As shown in Fig. 2, each inner film portion 20 has a protruding portion 23 protruding from the first layer 21 side to the second layer 22 side at a film overlapping section 50 in the gusset portion 40 where the film portions 20 and 30 are arranged in a non-fixed state.

In the present embodiment, as shown in Fig. 4, the protruding portion 23 is formed in a plurality of linear shapes in a direction (vertical direction in the present embodiment) intersecting with a folding line 25 of the folded-back portion 24 of the inner film portion 20. Further, the protruding portion 23 is formed at a position where the inner film portions 20 overlap each other when the gusset portion 40 is folded. This is due to the method of forming the protruding portion 23, and the method of forming the protruding portion 23 will be described hereinbelow.

The protruding portion 23 may have any specific shape limited to the above-described linear shape, and the number of the protruding portions 23 may be one or more.

The protruding portion 23 can function as a support for the gusset portion 40 while the gusset portion 40 is opened when the gusset portion 40 is expanded, and can maintain the open state of the gusset portion 40. In particular, in the standing pouch of the present embodiment, where the open state of the gusset portion 40 is maintained, the state of the pouch 10 that is inflated before filling the contents is unlikely to be restored, so that the opening property of the pouch 10 can be improved and the open state can be maintained. These linear protruding portions 23 project toward the bottom side (outer side) in a state where the gusset portion 40 is expanded.

As shown in Fig. 2, the outer film portion 30 is formed as a laminated film obtained by laminating and bonding the first layer 31 and the second layer 32 having an elongation smaller than that of the first layer 31.

As shown in Fig. 2, each outer film portion 30 is arranged such that the second layer 32 is located on the outer side of the pouch 10 with respect to the first layer 31.

When the pouch 10 is shaped, the first layers 31 of the outer film portion 30 on the front and back sides are thermally fused to each other except the bottom part (top part, side part) of the pouch 10.

Examples of specific materials that can be used for the first layers 21 and 31 of the film portions 20 and 30 include low-, medium-, and high-density polyethylene (PE), linear low-density polyethylene (LLDPE), and linear ultra-low-density polyethylene (LULDPE), isotactic polypropylene (PP), propylene-ethylene copolymer, ethylene-vinyl acetate copolymer, ethylene-acrylic acid copolymer, ethylene-methyl methacrylate copolymer, ion-crosslinked olefin copolymers (ionomers), a modified olefin resin such as an olefin resin graft-modified with an ethylenically unsaturated carboxylic acid or an anhydride thereof, and the like.

A stretched film can be suitably used as a specific material for the second layers 22 and 32 of the film portions 20 and 30, and a polyamide film such as a nylon film, a polyester film such as a polyethylene terephthalate (PET) film, and the like can be suitably used.

The thickness of the first layers 21 and 31 of the film portions 20 and 30 is set to about 18 µm to 200 µm, and the thickness of the second layers 22 and 32 of the film portions 20 and 30 is set to about 10 µm to 40 µm. The first layers 21 and 31 are formed to be 1.8 to 20 times thicker than the second layers 22 and 32.

Further, the total thickness of each film portion 20 and 30 (including each layer when each film portion 20 and 30 has a layer other than the first layers 21 and 31 and the second layers 22 and 32) is 30 µm to 300 µm.

Next, a method for three-dimensionally molding a film and a method for manufacturing a film molded body in the present embodiment will be described hereinbelow.

First, the pouch 10 having the gusset portion 40 (film overlapping section 50) is shaped.

Next, cold compression molding is performed in the thickness direction on the film overlapping section 50 where the film portions 20 and 30 are arranged to overlap in a non-fixed state, and specifically, as shown in Fig. 3, a total of four film portions 20 and 30 arranged at the film overlapping section 50 are sandwiched between and compressed by a pair of compression tools (molds) 60 arranged on the outer side of the outer film portions 30, and the compressed state is thereafter released to form a protruding portion 23 by causing a part of the inner film portion 20 to protrude to the second layer 22 side, as shown in Fig. 2. As a result, it is possible to mold the protruding portions 23 at positions where the inner film portions 20 overlap each other.

As shown in Fig. 4, with the above-described compression molding, no three-dimensional processing mark remains on the outer film portion 30, or even if a three-dimensional processing mark (not shown) is formed, only a small three-dimensional processing mark, that is, a three-dimensional processing mark with a smaller deformation amount in the thickness direction than the protrusion amount of the protruding portion 23 in the thickness direction, remains.

The above-mentioned three-dimensional processing mark is a site where a part of the outer film portion 30 is deformed into an uneven shape in the thickness direction by being compressed by the compression tool 60, and when the three-dimensional processing mark is formed on the outer film portion 30, in a state where the inner film portion 20 and the outer film portion 30 are arranged to overlap, as shown in Fig. 2, the three-dimensional processing mark is formed in the vicinity of a position 33 corresponding to the protruding portion 23 of the inner film portion 20.

Here, the mechanism of the protrusion phenomenon that is manifested when the inner film portion 20 is cold compressed in the thickness direction is not necessarily clear, but it is conceivable that the reason therefor is that after the compressive force is released, the thickness restoration behavior of the inner film portion 20 is such that the first layer 21 with relatively large elongation undergoes large restoration and the second layer 22 with relatively small elongation undergoes little restoration.

In addition, the appearance of the protrusion phenomenon on the inner film portion 20 while no three-dimensional processing mark is left on the outer film portion 30 or a small three-dimensional processing mark is left on the outer film portion 30 when cold compression molding is performed in the thickness direction, as described hereinabove, is conceivably due to the fact that the inner film portion 20 extends in the plane direction of the film and is compressed in the thickness direction greater than the outer film portion 30 because when compression molding is performed on the film overlapping section 50 by a compression tool 60 from the outer side of the outer film portion 30, friction between the film portions (between the inner film portion 20 and the outer film portion 30, and between the inner film portions 20) is less than that between the outer film portion 30 and the compression tool 60.

In the present embodiment, the two inner film portions 20 are arranged between the two outer film portions 30, but one or three or more inner film portions 20 may be arranged. In that case, the protruding portion 23 may be formed on the second layer 22 side of all of the three or more inner film portions 20.

When two or more inner film portions 20 are arranged between the outer film portions 30, at least two of the two or more inner film portions 20 are preferably arranged so that the second layers 22 face each other.

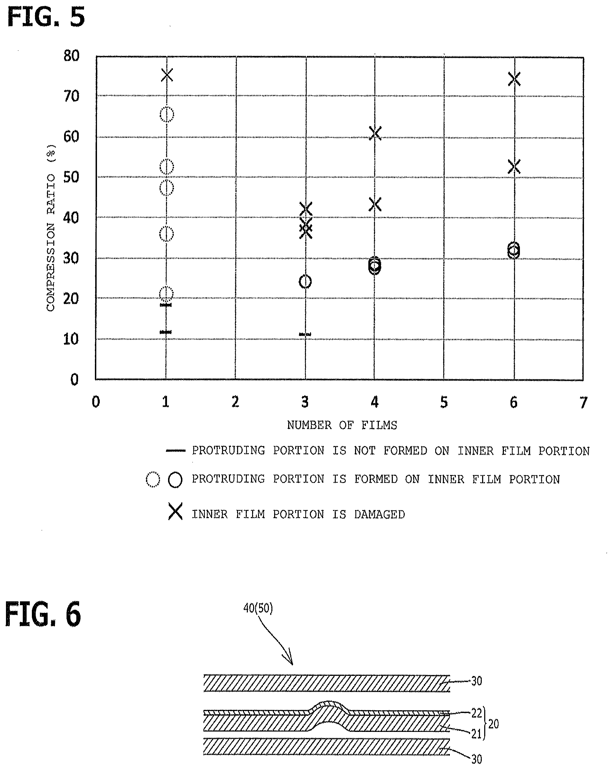

Further, in order to form the protruding portion 23 favorably, as can be seen from the test result shown in Fig. 5 (test result when one film is used), it is preferable to design the compression molding ratio of the inner film portion 20 in the thickness direction to be from 20% or more to 65% or less of the thickness of the inner film portion 20.

Further, in order to form the protruding portion 23 favorably, as can be seen from the test result shown in Fig. 5 (test result when 3 to 6 films are used (including two outer film portions 30, the remainder being inner film portion 20)), it is preferable to design the compression molding ratio of the inner film portion 20 and two outer film portions 30 in the thickness direction to be from 20% or more to 35% or less of the total thickness of the inner film portion 20 and the two outer film portions 30.

Where the compression molding ratio is set too low, the protruding portion 23 is not formed in the inner film portion 20, and where the compression molding ratio is set too high, the elongation of the inner film portion 20 becomes excessive and damage such as tearing will occur in the inner film portion 20.

The test shown in Fig. 5 was performed using the film portions 20 and 30 formed by laminating 15-µm nylon films (first layers 21 and 31), 12-µm PET, and 120-µm LLDPE (second layers 22 and 32).

The embodiment of the present invention has been described in detail above, but the present invention is not limited to this embodiment, and various design changes can be made without departing from the present invention described in the claims.

For example, in the configuration described in the abovementioned embodiment, the film molded body is the pouch 10, but the specific form of the film molded body is not limited to the pouch 10, and the molded body may have any form, provided that a film is used as a constituent material of a part thereof.

Further, in the configuration described in the abovementioned embodiment, the film overlapping section 50 to be cold-compressed in the thickness direction is set in the gusset portion 40 of the pouch 10, but the specific position of the film overlapping section 50 may be at any location as long as at least one inner film portion 20 is arranged between the two outer film portions 30 in a non-fixed state at this location.

Further, in the configuration described in the abovementioned embodiment, the gusset portion 40 is formed at the bottom portion of the pouch 10, but the specific formation position of the gusset portion 40 may be any position, for example, such as the side portion of the pouch 10.

Further, in the configuration described in the abovementioned embodiment, as shown in (a) in Fig. 7, in the gusset portion 40, the inner film portion 20 is connected at the upper end thereof and folded back in a V shape, and each outer film portion 30 is thermally bonded to the facing inner film portion 20. However, the gusset portion 40 may have a shape in which the inner film portion 20 folded back three times like a W shape is thermally bonded between the outer film portions 30, or the inner film portion may be folded a larger number of times. Further, the invention is not limited to this, and the gusset portion 40 composed of the outer film portions 30 and the inner film portion 20 may be formed by folding one film 3 times like an M shape, or the gusset portion 40 composed of the outer film portions 30 and the inner film portion 20 may be formed by folding one film twice like a Z shape, by folding one film four times like two successive Z shapes, by folding one film five times to sandwich a W-like shape, or by folding one film a larger number of times.

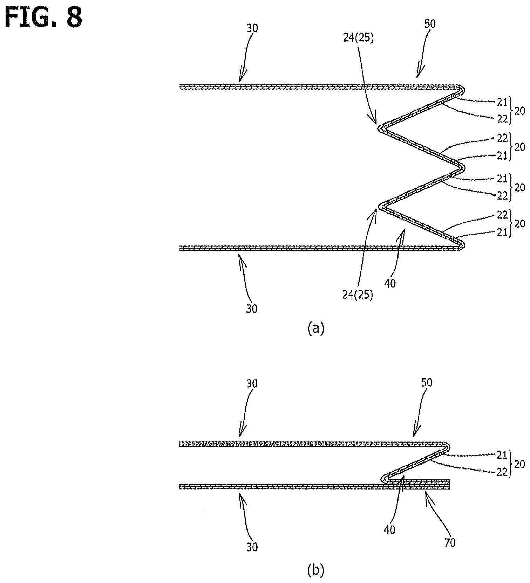

The abovementioned modified examples of the gusset portion 40 are shown in (b) and (c) in Fig. 7 and (a) and (b) in Fig. 8. Here, (a) to (c) in Fig. 7 and (a) and (b) in Fig. 8 schematically show the pouch 10 in a state before the protruding portion 23 is formed.

Further, in the configuration described in the abovementioned embodiment, the two inner film portions 20 are arranged between the outer film portions 30 in the film overlapping section 50, but the number of the inner film portions 20 may be one or more. For example, as shown in Fig. 6, compression molding may be performed by arranging only one inner film portion 20 between the two outer film portions 30.

Further, in the configuration described in the abovementioned embodiment, the inner film portion 20 is formed by bonding only two layers, namely the first layer 21 and the second layer 22, but other layers (a metal layer made of aluminum or the like, a layer made of another stretched resin film, or the like) may be provided between the first layer 21 and the second layer 22 or outside the first layer 21 or the second layer 22.

Further, in the configuration described in the abovementioned embodiment, the protruding portion 23 functions as a support when the gusset portion 40 spreads, but the protruding portion 23 may be formed for a variety of purposes. For example, the protruding portion 23 may be formed for the purpose of decorating with letters, patterns and character shapes, braille processing, slip prevention, and the like. As a result, it is possible to obtain an unprecedented decorating effect in the film molded body, and it is possible to enlarge the width of the universal design.

Further, in the configuration described in the abovementioned embodiment, the outer film portion 30 is formed of a two-layer structure including the first layer 31 and the second layer 32, like the inner film portion 20, but the outer film portion 30 may have any specific form, for example, it may have a single layer structure as shown in Fig. 6, and any specific material may be used for the outer film portion 30.

### [Reference Signs List]

- 10: Pouch (film molded body)
- 20: Inner film portion
- 21: First layer
- 22: Second layer
- 23: Protruding portion
- 24: Folded-back portion
- 25: Folding line
- 30: Outer film portion
- 31: First layer
- 32: Second layer
- 40: Gusset portion
- 50: Film overlapping section
- 60: Compression tool
- 70: Thermal bonding portion

## Claims

1. A method for three-dimensionally molding a film, the method comprising performing cold compression molding in a thickness direction on a film overlapping section in which at least one inner film portion including a first layer and a second layer having an elongation smaller than that of the first layer is arranged between two outer film portions in a non-fixed state with respect to the outer film portions, thereby causing the inner film portion to protrude toward the second layer side at the film overlapping section.

2. The method for three-dimensionally molding a film according to claim 1, wherein a compression molding ratio of the inner film portion in the thickness direction is 20% or more of a thickness of the inner film portion.

3. The method for three-dimensionally molding a film according to claim 1 or 2, wherein a compression molding ratio of the inner film portion and the two outer film portions in the thickness direction is 20% or more of a total thickness of the inner film portion and the two outer film portions.

4. A method for manufacturing a film molded body in which at least one inner film portion including a first layer and a second layer having an elongation smaller than that of the first layer forms a gusset portion between two outer film portions, the method comprising
performing cold compression molding in a thickness direction on the outer film portions at a film overlapping section in the gusset portion, thereby causing the inner film portion to protrude toward the second layer side at the film overlapping section.

5. The method for manufacturing a film molded body according to claim 4, wherein the at least one inner film portion comprises two or more inner film portions, and when the compression molding is performed, at least two of the two or more inner film portions in the gusset portion are arranged such that the second layer of one of the at least two faces the second layer of another of the at least two.

6. A film molded body in which at least one inner film portion including a first layer and a second layer having an elongation smaller than that of the first layer forms a gusset portion between two outer film portions, wherein
the inner film portion in the gusset portion has a protruding portion that protrudes to the second layer side at a film overlapping section.

7. The film molded body according to claim 6, wherein the at least one inner film portion comprises two or more inner film portions, and at least two of the two or more inner film portions in the gusset portion are arranged so that the second layer of one of the at least two faces the second layer of another of the at least two.
